# EUROPEAN PATENT APPLICATION

(11) **EP 4 465 112 A1**
(43) Date of publication of application: **20.11.2024**
(21) Application number: 22943167.1
(22) Date of filing: 26.05.2022
(51) Int. Cl.: G02B 27/01, G08B 21/24

(54) **ANTI-SNOOPING PROMPT METHOD AND APPARATUS, AND ELECTRONIC DEVICE AND STORAGE MEDIUM**

(71) Applicant: Beijing Xiaomi Mobile Software Co., Ltd., Beijing 100085 (CN)
(72) Inventor: ZHANG, Nian, Beijing 100085 (CN)
(74) Representative: Dehns Germany Partnerschaft mbB
(86) International application number: PCT/CN2022/095387
(87) International publication number: WO 2023/225967

(57) **Abstract**

The present disclosure relates to an anti-snooping prompt method and apparatus, and an electronic device and a storage medium. The method comprises: acquiring environmental image data by means of a camera apparatus arranged on a wearable device; when it is determined that a photographic device is present in the environmental image data, determining a photographing angle of the photographic device; and when it is determined, according to the photographing angle, that a user is located within a photographing range of the photographic device, providing an anti-snooping prompt by means of the wearable device. Thus, when it is determined that a photographic device snooping on a user's privacy is present in the environment where the user is located, an anti-snooping prompt can be provided for the user by means of a wearable device, thereby effectively protecting the user's privacy and avoiding security problems caused by privacy disclosure.

## Description

### TECHNICAL FIELD

The present invention relates to the field of intelligent identification, in particular to an anti-snooping prompt method and apparatus, an electronic device and a storage medium.

### BACKGROUND OF THE INVENTION

In the related art, smart devices, such as smart phones, iPads, and unmanned aerial vehicle s, are equipped with cameras, and a smart device user, as a photographer, captures image information of a photographed person. In process of image capturing, the photographed person may be photographed unconsciously or without authorization due to the lack of an active prompting function on the smart device, resulting in the privacy present invention of the photographed person. Thus, how to effectively alert the photographed person in the case of being photographed so as to avoid the invasion of the photographed person's privacy has become an urgent problem to be solved.

### SUMMARY OF THE INVENTION

In order to solve problem in the related art, the present invention provides an anti-snooping prompt method and apparatus, an electronic device and a storage medium.

According to a first aspect of an example of the present invention, an anti-snooping prompt method is provided and includes: obtaining environmental image data by a camera apparatus arranged on the wearable device; determining, in response to determining that a photographic device is present in the environmental image data, a photographing angle of the photographic device; and providing an anti-snooping prompt by the wearable device in response to determining, according to the photographing angle, that a user is located within a photographing range of the photographic device.

In one embodiment, the method includes: determining, by identifying the environmental image data, whether a preset outline corresponding to the photographic device is present in the environmental image data; and determining, on a condition that the preset outline is present in the environmental image data, that the photographic device is present in the environmental image data.

In one embodiment, determining the photographing angle of the photographic device includes: determining a lens steering angle of the photographic device in the environmental image data; and determining the photographing angle of the photographic device according to the preset outline and the lens steering angle.

In one embodiment, determining the lens steering angle of the photographic device in the environmental image data includes: determining, by capturing a camera of the photographic device in the environmental image data, a lens size and a lens surface angle of the camera; determining a preset photographing range of the camera according to the lens size; and determining, according to the preset photographing range and the lens surface angle, the lens steering angle of the photographic device.

In one embodiment, the method includes: simulating, according to the environmental image data, a first photographing range of the wearable device in a virtual scenario; simulating, according to the photographing angle, a second photographing range of the photographic device in the virtual scenario; and determining, on a condition that an overlap region exists between the first photographing range and the second photographing range in the virtual scenario, that the user is located within the photographing range of the photographic device.

In one embodiment, the wearable device is a pair of smart glasses, and providing the anti-snooping prompt by the wearable device includes: determining position coordinates of the photographic device relative to the smart glasses; and providing, according to the position coordinates, the anti-snooping prompt on screens of the smart glasses.

In one embodiment, the method includes: determining, by identifying the environmental image data, whether a body feature is present in the environmental image data; determining, on a condition that the body feature is present in the environmental image data, a body posture corresponding to the body feature; and determining, on a condition that the body posture is a photographing posture, that the photographic device is present in the environmental image data.

In one embodiment, obtaining the environmental image data includes: obtaining initial environmental image data by the camera apparatus; determining, according to the initial environmental image data, a scenario type of an environment where the wearable device is located; and obtaining denoised environmental image data by performing denoising processing on the initial environmental image data according to the scenario type.

According to a second aspect of an example of the present invention, an anti-snooping prompt apparatus is provided and includes: an obtaining module, configured to obtain environmental image data by a camera apparatus arranged on a wearable device; a determining module, configured to determine, in response to determining that a photographic device is present in the environmental image data, a photographing angle of the photographic device; and a prompt module, configured to provide an anti-snooping prompt by the wearable device in response to determining, according to the photographing angle, that a user is located within a photographing range of the photographic device.

According to a third aspect of an example of the present invention, an electronic device is provided and includes: a processor; and a memory used for storing an executable instruction of the processor, where the processor is configured to implement, when executing the executable instruction, any step of the anti-snooping prompt method described in the first aspect.

According to a fourth aspect of an example of the present invention, a non-transitory computer-readable storage medium is provided and stores a computer program instruction. The program instruction, when executed by a processor, implements any step of the anti-snooping prompt method provided in the first aspect.

The technical solution provided by the example of the present invention may include the following beneficial effects:

in the above method, the environmental image data is obtained by the camera apparatus arranged on the wearable device, the photographing angle of the photographic device is determined in response to determining that the photographic device is present in the environmental image data, and the anti-snooping prompt is provided by the wearable device in response to determining, according to the photographing angle, that the user is located within the photographing range of the photographic device. In this way, an environmental image is collected by the camera apparatus on the wearable device, and in response to determining that the photographic device is present in the environmental image and that the user is located within the photographing angle of the photographic device, the anti-snooping prompt is provided by the wearable device. The anti-snooping prompt may be provided for the user in response to determining through the wearable device that the photographic device in the environment is snooping on the user's privacy, so that the user's privacy is effectively protected and a safety problem caused by privacy present invention is avoided.

It is to be understood that the above general description and following detailed description are merely for example and explanatory, and cannot limit the present invention.

### BRIEF DESCRIPTION OF DRAWINGS

Accompanying drawings here, which are incorporated in and constitute a part of this specification, illustrate examples consistent with the present invention and, together with the specification, serve to explain principles of the present invention.
Fig. 1 is a flow chart of an anti-snooping prompt method illustrated according to an example.
Fig. 2 is a sample chart of a wearable device illustrated according to an example.
Fig. 3 is a flow chart of a method for confirming a photographing angle illustrated according to an example.
Fig. 4 is a sample chart of another anti-snooping prompt method illustrated according to an example.
Fig. 5 is a flow chart of yet another anti-snooping prompt method illustrated according to an example.
Fig. 6 is a block diagram of an anti-snooping prompt apparatus illustrated according to an example.
Fig. 7 is a block diagram of an electronic device illustrated according to an example.

### DETAILED DESCRIPTION OF THE INVENTION

Examples will be described here in detail and their instances are shown in accompanying drawings. When the following description concerning the accompanying drawings, unless otherwise stated, the same reference numbers in different accompanying drawings represent the same or similar elements. Implementations described in the following examples do not represent all implementations consistent with the present invention. Rather, they are merely instances of an apparatus and a method consistent with some aspects of the present invention as detailed in the appended claims.

It is to be noted that all actions to obtain signals, information, or data in the present application are carried out in compliance with the corresponding data protection regulations and policies of the local country and with the authorization of the owner of the corresponding apparatus.

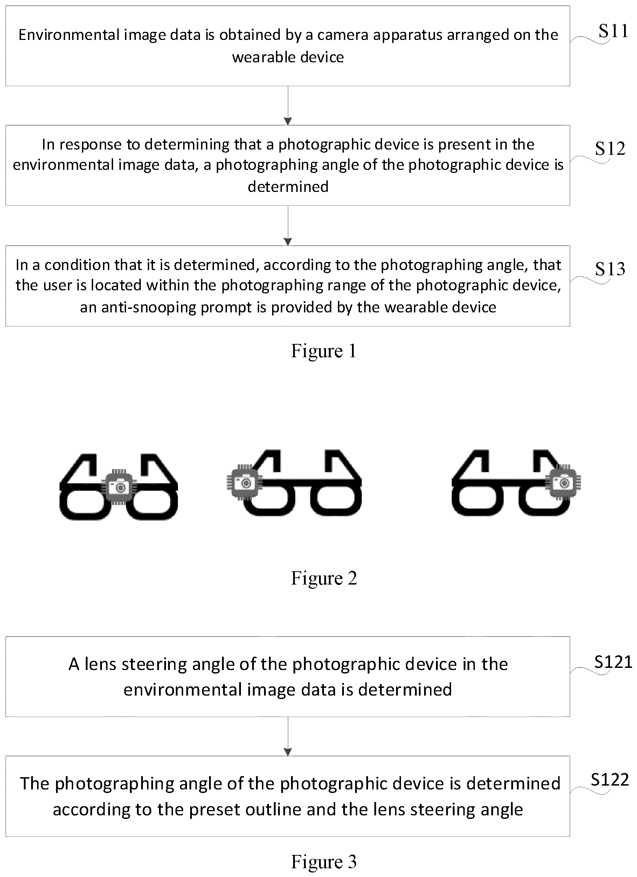

Fig. 1 is a flow chart of an anti-snooping prompt method illustrated according to an example. As shown in Fig. 1, the anti-snooping prompt method is performed by a wearable device and includes the following steps.

In step S11, environmental image data is obtained by a camera apparatus arranged on the wearable device.

It may be understood that the anti-snooping prompt method provided in this example is applied to the wearable device. Under normal circumstances, a head viewing angle corresponding to a user is wide and can accurately reflect the environmental image data of an environment where the user is located. Thus, the wearable device in this example may be a pair of smart glasses, a smart helmet, a smart headset or other wearable devices that the user may wear in a head region. In one embodiment, according to anti-snooping prompt needs of special positions such as a vision blind spot of the user, the wearable device may also be a smart backpack, a bracelet, a smart belt, etc., so as to capture a photographic device in the vision blind spot of the user and achieve an all-rounded anti-snooping prompt effect. The camera apparatus is arranged on the wearable device to collect the environmental image data of the environment where the user is located, and a photographing angle of the camera apparatus may be set according to a type of the wearable device. For example, in order to enable the camera apparatus to accurately collect the environmental image data of the environment where the user is located, the photographing angle of the camera apparatus may be adjusted according to a position of the camera apparatus arranged on the wearable device, so that the camera apparatus can effectively capture the environmental image data of the environment where the user is located. For example, Fig. 2 is a sample chart of a wearable device illustrated according to an example. As shown in Fig. 2, the wearable device is a pair of smart glasses. Under normal circumstances, the smart glasses are worn on user's eyes and cover the peripheries of the user's eyes. Thus, the corresponding camera apparatus may be arranged on a position at a left rim, a bridge at the middle or a right rim of the smart glasses, so as to better capture the environmental image data of a current environment where the user is located. In one embodiment, when the wearable device is the smart backpack, the anti-snooping prompt may be provided based on the environmental image data in a present range of the back of the user, so the corresponding camera apparatus may be arranged on an upper edge of the smart backpack so as to capture the environmental image data of a current environment of the back of the user.

It is to be noted that in this example, to ensure a wearing use function of the wearable device, the camera apparatus correspondingly arranged on the wearable device is relatively small to ensure that normal use of the wearable device is not affected. The camera apparatus needs to be turned on during normal use of the wearable device, so in order to prolong a cruising ability of the camera apparatus and to prevent the camera apparatus from affecting the normal use of the wearable device, a camera with low power consumption may be adopted in this example, so as to ensure that the camera apparatus can run in real time for a long time. In the collection of the environmental image data, the photographic device is captured mainly, so an internal parameter configuration of the camera apparatus may be lowered as appropriate. For example, the camera apparatus may adopt a QVGA/QQVGA resolution ratio to collect the environmental image data.

In one embodiment, the above step S11 includes:
obtaining initial environmental image data by the camera apparatus;
determining, according to the initial environmental image data, a scenario type of an environment where the wearable device is located; and
obtaining denoised environmental image data by performing denoising processing on the initial environmental image data according to the scenario type.

For example, when the wearable device in this example analyzes the environmental image data, many interfering factors exist in the initial environmental image data and may be prone to interfering with the analysis of the environmental image data. Thus, the initial environmental image data obtained through photographing needs to be denoised. In this example, the initial environmental image data is analyzed to determine the scenario type of the environment where the wearable device is located. For example, scenario types may include: indoor dimness, indoor brightness, outdoor white light, outdoor yellow light, outdoor dimness, and other scenario s. According to environmental parameters under different scenario types, the denoised environmental image data is obtained by performing denoising processing on the initial environmental image data.

In step S12, in response to determining that a photographic device is present in the environmental image data, a photographing angle of the photographic device is determined.

It may be understood that a microprocessor unit may be arranged in the wearable device in this example. The microprocessor unit performs image processing and analysis on the environmental image data obtained by the camera apparatus, identifies elements in the environmental image data, and analyses whether the elements include a photographic device.

For example, whether the photographic device is present in the environment where the user is located may be determined according to infrared light emitted by the photographic device during snooping photographing; and whether the photographic device is present in the environment where the user is located may also be determined by determining whether a lens for photographing is present in the environmental image data. When the photographic device is present in the environmental image data, the photographing angle of the photographic device is determined according to a position of the photographic device in the environment image. For example, the microprocessor unit arranged in the wearable device in this example is a system on chip (SOC). The environmental image data photographed by the camera apparatus is analyzed by the SOC, whether the photographic device is present in the environmental image data is determined, and the photographing angle of the photographic device is analyzed. In the meantime, the SOC may also control the wearable device to provide the anti-snooping prompt in case of subsequent snooping risks.

In one embodiment, the prompt method further includes:
determining, by identifying the environmental image data, whether a preset outline corresponding to the photographic device is present in the environmental image data.

On a condition that the preset outline is present in the environmental image data, it is determined that the photographic device is present in the environmental image data.

It is to be noted that the photographic device in the environmental image data may include various types, such as a smartphone, a professional camera, a camcorder, and a surveillance probe. However, because of the existence of a manufacturing standard with fixed specifications for different types of photographic devices, the same type of photographic device has the same or similar preset outline in the environmental image data. The preset outline may be an outline line composed of bezel lines of the photographic device and may also be a preset outline based on a combination of the bezel lines of the photographic device and lens lines of a corresponding photographing lens. For example, when the smartphone is used as the photographic device, the preset outline determined through detection of the environmental image data is a combination of the outline lines of the phone and the outline lines of the corresponding lens; and when the photographic device is a digital camera, the preset outline determined through detection of the environmental image data is a combination of the outline lines of the lens and corresponding grip outline lines corresponding to the user's grip of the digital camera, where the grip outline lines include bezel feature lines of the digital camera and finger grip line during the user's grip. Through a limited number of experiments, the preset outlines of different types of photographic devices are stored to a storage unit of the wearable device, and whether the preset outline is present in the environmental image data is determined through an outline detection algorithm, so that whether the photographic device is present in the environment where the user is located is determined. For example, the preset outline may be enlarged or narrowed in equal proportions, and whether the photographic device is present in the environmental image data is confirmed by comparing similarity between the outline in the environmental image data and the preset outline.

In one embodiment, the prompt method may further include:
whether a body feature is present in the environmental image data is determined by identifying the environmental image data.

On a condition that the body feature is present in the environmental image data, a body posture corresponding to the body feature is determined.

On a condition that the body posture is a photographing posture, it is determined that the photographic device is present in the environmental image data.

It may be understood that in this example, whether the body feature is present in the environmental image data is determined by identifying the environmental image data. The body feature is a limb feature of each part of a human body. For example, the environmental image data may be converted into a heat map, and whether the body feature is present in the environmental image data is determined by the heat map. In response to determining that the body feature is present in the photographing angle corresponding to the wearable device, the body posture corresponding to the body feature in the environmental image data is determined according to a human body identification model. It is to be noted that there is a grip on the photographic device when the photographing person takes an image by the photographic device. In this example, a photographing posture of each type of photographic device is determined, and it is determined that the photographic device is present in the environmental image data by determining that the body posture is the photographing posture.

Fig. 3 is a flow chart of a method for confirming a photographing angle illustrated according to an example. The above step S12 includes the following steps.

In step S121, a lens steering angle of the photographic device in the environmental image data is determined.

In step S122, the photographing angle of the photographic device is determined according to the preset outline and the lens steering angle.

It is to be noted that after determining that the photographic device is present in the environment where the user is located through the above steps, the photographing angle of the photographic device further needs to be detected. When the user is located outside the photographing angle of the photographic device, there is no risk of the user's privacy being snooped by the photographic device; and when the photographing angle of the photographic device directly faces the user, the photographic device can accurately obtain the user's privacy without authorization by the user. In this example, after locking the photographic device in the environmental image data based on the preset outline through the above steps, an angle of the lens of the photographic device may be detected to determine the lens steering angle of the photographic device. In this example, the preset outline corresponds to different types of photographic devices, and the photographing range of the photographic device may be determined according to the type of the photographic device; and the photographing angle of the photographic device is determined by the photographing range and the lens steering angle, and correspondingly, a framing range of the photographic device in the environment may be determined.

In one embodiment, the above step S121 includes:
determining, by capturing a camera of the photographic device in the environmental image data, a lens size and a lens surface angle of the camera.

A preset photographing range of the camera is determined according to the lens size.

The lens steering angle of the photographic device is determined according to the preset photographing range and the lens surface angle.

It may be understood that under normal circumstances, the camera specifications and shapes of the photographic device are usually relatively uniform, and the corresponding lens sizes vary to a certain extent depending on the different models of the photographic device. The lens size of the camera is determined by capturing the camera in the corresponding preset outline in the environmental image data. The lens surface angle of the camera is determined by analyzing a shape of a lens surface within that camera. The lens surface angle indicates a direction in which the camera is facing when the photographic device is taking a picture, and a corresponding photographing direction of the photographic device when the photographic device is photographing is determined by determining the lens surface angle. It is to be noted that the photographing range of the photographic device is related to the lens size, and according to internal parameters of the camera apparatus in the wearable device and the lens size of the corresponding photographic device in the environmental image data, a true size of the corresponding lens of the photographic device may be determined. Under normal circumstances, the lens size corresponds to the photographing range of the camera, and a preset photographing range of the camera may be determined by the lens size. Through the preset photographing range and the lens surface angle, the lens steering angle of the photographic device in the environment where it is located may be determined.

In one embodiment, the prompt method may further include:
a first photographing range of the wearable device is simulated in a virtual scenario according to the environmental image data.
a second photographing range of the photographic device is simulated in the virtual scenario according to the photographing angle.

In the virtual scenario, on a condition that an overlap region exists between the first photographing range and the second photographing range, it is determined that the user is located within the photographing range of the photographic device.

It may be understood that in this example, to better confirm whether the user is within the photographing range of the photographic device, the environment where the user is located may be simulated by a micro-control unit in the wearable device according to the environmental image data, and the user and elements in the environmental image data may be constructed into the virtual scenario. The first photographing range of the wearable device in the virtual scenario is determined by the environmental image data. After determining the photographing angle of the photographic device according to the above steps, the second photographing range of the photographic device is determined by the position of the photographic device in the environmental image data, and the second photographing range is simulated in the virtual scenario with the photographic device as a starting point. The simulated virtual scenario is judged to determine whether the overlap region exists between the first photographing range and the second photographing range in the virtual scenario, thus determining whether the wearable device is within the photographing range of the photographic device.

In step S13, on a condition that it is determined, according to the photographing angle, that the user is located within the photographing range of the photographic device, an anti-snooping prompt is provided by the wearable device.

For example, in step S13, in response to determining through the above steps that the wearable device is located within the photographing range of the photographic device, it is indicated that the user may be snooped on by the device, which leads to privacy present invention. Thus, the anti-snooping prompt may be provided by the wearable device. For example, when a snooping condition is satisfied, a prompt speech may be issued by the wearable device to remind the user to protect the privacy and security; a vibration may also be issued by the wearable device to convey a warning signal; and a warning signal may also be displayed on a display apparatus of the wearable device to prompt the user to protect the privacy, which is not limited by this example.

In one embodiment, the above step S13 includes:
determining position coordinates of the photographic device relative to the smart glasses.

The anti-snooping prompt is provided on screens of the smart glasses according to the position coordinates.

For example, the wearable device in this example is the pair of smart glasses, after it is determined through the above steps that the photographic device is snooping on the user's privacy, the position coordinates of the photographic device relative to the smart glasses may be determined according to the position of the photographic device in the environmental image data. For example, a center of an image of the environmental image data may be set as a coordinate origin, and by determining the position of the photographic device relative to the coordinate origin, the position coordinates of the photographic device relative to the smart glasses may be determined. According to the position coordinates, a warning label may be placed at the relative position of the smart glasses, so as to play an effect of anti-snooping prompt.

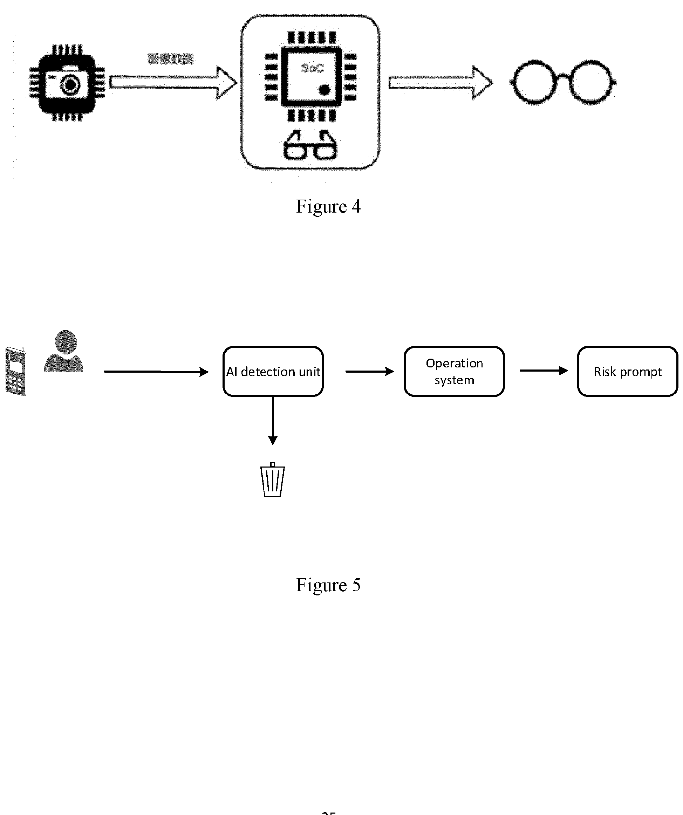

Fig. 4 is a sample chart of another anti-snooping prompt method illustrated according to an example. As shown in Fig. 4, the prompt method is performed by a pair of smart glasses, a camera with low power consumption is arranged on the smart glasses, and ophthalmic lens of the smart glasses may display prompt information.

Environmental image data of an environment where a user is located is obtained through the camera with the low power consumption arranged on the smart glasses, and the environmental image data is transmitted to a micro-control unit of the smart glasses. When the micro-control unit determines, through an algorithm, that a photographic device in the environment where the user is located is photographing the user, the prompt information is displayed through the ophthalmic lens of the smart glasses, so as to prompt the user to protect privacy and security.

Fig. 5 is a flow chart of yet another anti-snooping prompt method illustrated according to an example. As shown in Fig. 5, the prompt method includes:
after an environmental image of an environment where a user is located is collected by a camera apparatus on a wearable device, the environment image with a low resolution ratio is transmitted to an Al algorithm unit; whether a photographic device is present in the environmental image is determined through the Al algorithm unit, and when the user is located within a photographing angle range of the photographic device, a detection result is sent to an operation system of the wearable device, and at the same time, the environmental image is deleted to save a storage space; the operation system of the wearable device parses the detection result to determine whether there is a risk that a user's privacy is snooped on; and in a case of presence of a risk of privacy present invention, a prompt signal is sent to a risk prompting unit, so that the risk prompting unit provides an anti-snooping prompt.

In the above implementation, environmental image data is obtained by the camera apparatus arranged on the wearable device, the photographing angle of the camera apparatus is determined in response to determining that the photographic device is present in the environmental image data, and the anti-snooping prompt is provided by the wearable device in response to determining according to the photographing angle that the user is located within the photographing range of the photographic device. In this way, the environmental image is collected by the camera apparatus on the wearable device, and in response to determining that the photographic device is present in the environmental image and that the user is located within the photographing angle of the photographic device, the anti-snooping prompt is provided by the wearable device. The anti-snooping prompt may be provided for the user in response to determining through the wearable device that the photographic device in the environment is snooping on the user's privacy, so that the user's privacy is effectively protected and a safety problem caused by the privacy present invention is avoided.

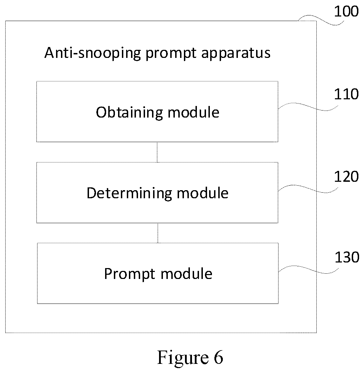

Fig. 6 is a block diagram of an anti-snooping prompt apparatus illustrated according to an example. Referring to Fig. 6, the prompt apparatus 100 includes an obtaining module 110, a determining module 120 and a prompt module 130.

The obtaining module 110 is configured to obtain environmental image data by a camera apparatus arranged on a wearable device.

The determining module 120 is configured to determine, in response to determining that a photographic device is present in the environmental image data, a photographing angle of the photographic device.

The prompt module 130 is configured to provide an anti-snooping prompt by the wearable device in response to determining, according to the photographing angle, that a user is located within a photographing range of the photographic device.

In one embodiment, the prompt apparatus 100 further includes a first identification module. The first identification module is configured to:
determine, by identifying the environmental image data, whether a preset outline corresponding to the photographic device is present in the environmental image data; and
determine, on a condition that the preset outline is present in the environmental image data, that the photographic device is present in the environmental image data.

In one embodiment, the determining module 120 may include:
a first determining submodule, configured to determine a lens steering angle of the photographic device in the environmental image data; and
a second determining submodule, configured to determine the photographing angle of the photographic device according to the preset outline and the lens steering angle.

In one embodiment, the first determining submodule may further be configured to:
determine, by capturing a camera of the photographic device in the environmental image, a lens size and a lens surface angle of the camera;
determine a preset photographing range of the camera according to the lens size; and
determine, according to the preset photographing range and the lens surface angle, the lens steering angle of the photographic device.

In one embodiment, the prompt apparatus 100 further includes a deciding module. The deciding module is configured to:
simulate, according to the environmental image data, a first photographing range of the wearable device in a virtual scenario;
simulate, according to the photographing angle, a second photographing range of the photographic device in the virtual scenario; and
determine, on a condition that an overlap region exists between the first photographing range and the second photographing range in the virtual scenario, that the user is located within the photographing range of the photographic device.

In one embodiment, the prompt module 130 may further be configured to:
determine position coordinates of the photographic device relative to the smart glasses; and
provide, according to the position coordinates, the anti-snooping prompt on screens of the smart glasses.

In one embodiment, the prompt apparatus 100 further includes a second identification module. The second identification module is configured to:
determine, by identifying the environmental image data, whether a body feature is present in the environmental image data;
determine, on a condition that the body feature is present in the environmental image data, a body posture corresponding to the body feature; and
determine, on a condition that the body posture is a photographing posture, that the photographic device is present in the environmental image data.

In one embodiment, the obtaining module 110 may further be configured to:
obtain initial environmental image data by the camera apparatus;
determine, according to the initial environmental image data, a scenario type of an environment where the wearable device is located; and
obtain denoised environmental image data by performing denoising processing on the initial environmental image data according to the scenario type.

With respect to the apparatus in the above example, the specific manner in which each module performs an operation has been described in detail in the examples related to the method, and will not be described in detail here.

The present invention further provides a non-transitory computer-readable storage medium, storing a computer program instruction. The program instruction, when being executed by a processor, implements steps of the anti-snooping prompt method provided by the present invention.

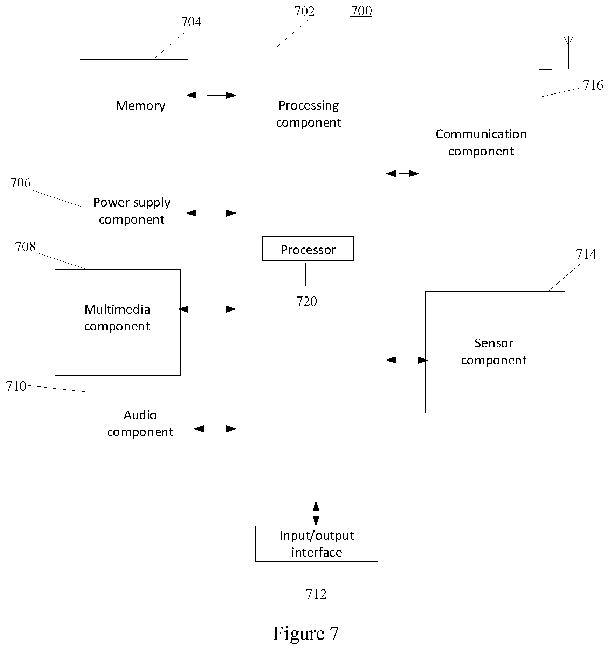

Fig. 7 is a block diagram of an electronic device illustrated according to an example. For example, an apparatus 700 may be a cell phone, a computer, a digital broadcast terminal, a message transceiving device, a game console, a tablet device, a medical device, a fitness device, a personal digital assistant, etc.

Referring to Fig. 7, the apparatus 700 may include one or more components as follows: a processing component 702, a memory 704, a power source component 706, a multimedia component 707, an audio component 710, an input/output interface 712, a sensor component 714 and a communication component 716.

The processing component 702 generally controls a whole operation of the apparatus 700, such as operations related to display, phone call, data communication, a camera operation and a recording operation. The processing component 702 may include one or more processors 720 for executing an instruction so as to complete all or part of steps of the above anti-snooping prompt method. Besides, the processing component 702 may include one or more modules to facilitate interaction between the processing component 702 and the other components. For example, the processing component 702 may include a multimedia module so as to facilitate interaction between the multimedia component 707 and the processing component 702.

The memory 704 is configured to store various types of data so as to support operations on the apparatus 700. Instances of these data include an instruction of any application program or method for operation on the apparatus 700, contact person data, telephone directory data, messages, pictures, videos and the like. The memory 704 may be realized by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or a compact disc.

The power source component 706 provides power for the various components of the apparatus 700. The power source component 706 may include a power management system, one or more power sources, and other components related to power generation, management and distribution for the apparatus 700.

The multimedia component 707 includes a screen which provides an output interface between the apparatus 700 and a user. In some examples, the screen may include a liquid crystal display (LCD) and a touch panel (TP). If the screen includes the touch panel, the screen may be implemented as a touch screen so as to receive an input signal from the user. The touch panel includes one or more touch sensors so as to sense touching, swiping and gestures on the touch panel. The touch sensor can not only sense a boundary of a touching or swiping action, but also detect duration and pressure related to a touching or swiping operation. In some examples, the multimedia component 707 includes a front camera and/or a rear camera. When the apparatus 700 is in an operation mode, such as a photographing mode or a video mode, the front camera and/or the rear camera may receive external multimedia data. Each front camera and each rear camera may be a fixed optical lens system or have a focal length and an optical zoom capability.

The audio component 710 is configured to output and/or input an audio signal. For example, the audio component 710 includes a microphone (MIC). When the apparatus 700 is in the operation mode, such as a call mode, a recording mode and a voice identification mode, the microphone is configured to receive an external audio signal. The received audio signal may be further stored in the memory 704 or sent via the communication component 716. In some examples, the audio component 710 further includes a loudspeaker for outputting the audio signal.

The input/output interface 712 provides an interface between the processing component 702 and a peripheral interface module, and the peripheral interface module above may be a keyboard, a click wheel, buttons and the like. These buttons may include but are not limited to: a home button, a volume button, a start button and a lock button.

The sensor component 714 includes one or more sensors, configured to provide state evaluation of various aspects for the apparatus 700. For example, the sensor component 714 may detect a start/shut-down state of the apparatus 700 and relative positioning of the components, for example, the components are a display and a keypad of the apparatus 700. The sensor component 714 may further detect position change of the apparatus 700 or one component of the apparatus 700, whether there is a contact between the user and the apparatus 700, and azimuth or speed up/speed down and temperature change of the apparatus 700. The sensor component 714 may include a proximity sensor, configured to detect existence of a nearby object without any physical contact. The sensor component 714 may further include an optical sensor, such as a CMOS or CCD image sensor, for use in imaging application. In some examples, the sensor component 714 may further include an acceleration sensor, a gyroscope sensor, a magnetic sensor, a pressure sensor or a temperature sensor.

The communication component 716 is configured to facilitate wired or wireless communication between the apparatus 700 and other devices. The apparatus 700 may be accessed to a wireless network based on a communication standard, such as WiFi, 2G or 3G, or their combination. In an example, the communication component 716 receives a broadcast signal or related broadcast information from an external broadcast management system via a broadcast channel. In an example, the communication component 716 further includes a near-field communication (NFC) module so as to facilitate short-range communication. For example, the NFC module may be implemented based on a radio frequency identification (RFID) technology, an infra-red data association (IrDA) technology, an ultra wide band (UWB) technology, a Bluetooth (BT) technology and other technologies.

In an example, the apparatus 700 may be implemented by one or more application specific integrated circuits (ASICs), digital signal processors (DSPs), digital signal processing devices (DSPDs), programmable logic devices (PLDs), field-programmable gate arrays (FPGAs), controllers, microcontrollers, microprocessors or other electronic elements for executing the above anti-snooping prompt method.

In an example, a non-temporary computer-readable storage medium including an instruction is further provided, such as a memory 704 including the instruction. The above instruction may be executed by a processor 720 of an apparatus 700 so as to complete the above anti-snooping prompt method. For example, the non-temporary computer-readable storage medium may be an ROM, a random access memory (RAM), a CD-ROM, a magnetic tape, a floppy disk, an optical data storage device and the like.

In another example, a computer program product is also provided, including a computer program executable by a programmable apparatus. The computer program has a code part for performing the above anti-snooping prompt method when executed by the programmable apparatus.

Those skilled in the art will easily figure out other implementation solutions of the present invention after considering the specification and practicing the present invention disclosed here. The present invention intends to cover any transformation, usage or adaptive change of the present invention, and these transformations, usages or adaptive changes conform to a general principle of the present invention and include common general knowledge or conventional technical means in the technical field which are not disclosed by the present invention. The specification and the examples are merely regarded as an example, the true scope and spirit of the present invention are indicated by the following claims.

It is to be understood that the present invention is not limited to an accurate structure described above and shown in the accompanying drawings, and various modifications and changes may be made without departing from the scope of the present invention. The scope of the present invention is merely limited by the appended claims.

## Claims

1. An anti-snooping prompt method, performed by a wearable device and comprising:
obtaining environmental image data by a camera apparatus arranged on the wearable device;
determining, in response to determining that a photographic device is present in the environmental image data, a photographing angle of the photographic device; and
providing an anti-snooping prompt by the wearable device in response to determining, according to the photographing angle, that a user is located within a photographing range of the photographic device.

2. The anti-snooping prompt method according to claim 1, comprising:
determining, by identifying the environmental image data, whether a preset outline corresponding to the photographic device is present in the environmental image data; and
determining, on a condition that the preset outline is present in the environmental image data, that the photographic device is present in the environmental image data.

3. The anti-snooping prompt method according to claim 2, wherein determining the photographing angle of the photographic device comprises:
determining a lens steering angle of the photographic device in the environmental image data; and
determining the photographing angle of the photographic device according to the preset outline and the lens steering angle.

4. The anti-snooping prompt method according to claim 3, wherein determining the lens steering angle of the photographic device in the environmental image data comprises:
determining, by capturing a camera of the photographic device in the environmental image, a lens size and a lens surface angle of the camera;
determining a preset photographing range of the camera according to the lens size; and
determining, according to the preset photographing range and the lens surface angle, the lens steering angle of the photographic device.

5. The anti-snooping prompt method according to claim 1, comprising:
simulating, according to the environmental image data, a first photographing range of the wearable device in a virtual scenario;
simulating, according to the photographing angle, a second photographing range of the photographic device in the virtual scenario; and
determining, on a condition that an overlap region exists between the first photographing range and the second photographing range in the virtual scenario, that the user is located within the photographing range of the photographic device.

6. The anti-snooping prompt method according to claim 1, wherein the wearable device is a pair of smart glasses, and providing the anti-snooping prompt by the wearable device comprises:
determining position coordinates of the photographic device relative to the smart glasses; and
providing, according to the position coordinates, the anti-snooping prompt on screens of the smart glasses.

7. The anti-snooping prompt method according to claim 1, comprising:
determining, by identifying the environmental image data, whether a body feature is present in the environmental image data;
determining, on a condition that the body feature is present in the environmental image data, a body posture corresponding to the body feature; and
determining, on a condition that the body posture is a photographing posture, that the photographic device is present in the environmental image data.

8. The anti-snooping prompt method according to claim 1, wherein obtaining the environmental image data comprises:
obtaining initial environmental image data by the camera apparatus;
determining, according to the initial environmental image data, a scenario type of an environment where the wearable device is located; and
obtaining denoised environmental image data by performing denoising processing on the initial environmental image data according to the scenario type.

9. An anti-snooping prompt apparatus, comprising:
an obtaining module, configured to obtain environmental image data by a camera apparatus arranged on a wearable device;
a determining module, configured to determine, in response to determining that a photographic device is present in the environmental image data, a photographing angle of the photographic device; and
a prompt module, configured to provide an anti-snooping prompt by the wearable device in response to determining, according to the photographing angle, that a user is located within a photographing range of the photographic device.

10. An electronic device, comprising:
a processor; and
a memory used for storing an executable instruction of the processor, wherein
the processor is configured to implement, when executing the executable instruction, steps of the method according to any one of claims 1-8.

11. A non-transitory computer-readable storage medium, storing a computer program instruction, wherein the program instruction, when executed by a processor, implements steps of the method according to any one of claims 1-8.
